# EUROPÄISCHE PATENTANMELDUNG

(11) **EP 0 776 794 A2**
(43) Veröffentlichungstag der Anmeldung: **04.06.1997**
(21) Anmeldenummer: 96118417.3
(22) Anmeldetag: 16.11.1996
(51) Int. Cl.: B60R 21/26

(54) **Gasgenerator für ein Airbagsystem**

(30) Priorität: 02.12.1995 DE 19545007
(71) Anmelder: TEMIC Bayern-Chemie Airbag GmbH, D-84544 Aschau (DE)
(72) Erfinder: Winterhalder, Marc, 84518 Garching an der Alz (DE)
(74) Vertreter: Maute, Hans-Jürgen, Dipl.-Ing.

(57) **Zusammenfassung**

Ein Gasgenerator für ein Airbagsystem weist eine Brennkammer auf, in der ein brennbares Treibmittel untergebracht ist, das durch eine im Bereich der Brennkammer angeordnete Einrichtung zur Erzeugung eines optischen Zündimpulses, vorzugsweise eines Laserstrahls, entzündbar ist. In der Brennkammer ist ein fluides Treibmittel vorgesehen, das durch einen oder mehrere großflächig unplaziert und ziellos in die Brennkammer gelenkte Strahlen entzündbar ist. Daher ist der Montageaufwand beim Zusammenbau des Gasgenerators verringert, da innerhalb des Gasgenerators möglichst wenige einzelne Kammern und wenige Durchführungen zur Verbindung der einzelnen Kammern vorgesehen sind. Der Anzündvorgang kann innerhalb der Brennkammer möglichst gleichzeitig gestartet werden bzw. ablaufen, ohne zusätzliche optische Fokusiereinrichtungen zu benötigen.

## Beschreibung

Die vorliegende Erfindung betrifft einen Gasgenerator für ein Airbagsystem mit einer Brennkammer, in der ein brennbares Treibmittel untergebracht ist, das durch eine im Bereich der Brennkammer angeordnete Einrichtung zur Erzeugung eines optischen Zündimpulses, vorzugsweise eines Laserstrahls, entzündbar ist.

Ein derartiger Gasgenerator ist durch die EP 0 622 278 A1 bekanntgeworden.

Airbagsysteme werden in Fahrzeugen eingebaut, um im Falle eines harten Aufprallunfalls des Fahrzeugs die kinetische Energie der Fahrzeuginsassen zu reduzieren und die Fahrzeuginsassen vor dem Aufprall auf harte Fahrzeuginnenteile, wie beispielsweise Lenkrad oder Seitenverkleidungen der Fahrzeugtüren, zu schützen. Wenn eine Sensorik des Airbagsystems einen Aufprallunfall des Fahrzeugs erkennt, wird innerhalb des Gasgenerators ein Treibmittel entzündet, das in der Brennkammer unter einem hohen Druck abbrennt und ein aus der Brennkammer ausströmendes Gas erzeugt. Dieses Gas dient zum Füllen eines Luftsackes, auf den die Fahrzeuginsassen im Falle des Aufprallunfalls des Fahrzeugs auftreffen.

Innerhalb der Brennkammer des bekannten Gasgenerators ist ein Laser angeordnet, dessen Strahl bei der Zündung des Treibmittels direkt auf die Oberfläche des als Festkörper vorliegenden Treibmittels gerichtet oder gelenkt ist. Das Treibmittel selbst besteht aus einzelnen Feststoff-Tabletten, auf deren Oberfläche der Laserstrahl mit einer hohen Strahlungsdichte beim Anzündvorgang fokusiert wird. Dadurch läßt sich auf der Oberfläche der Feststoff-Tabletten eine hohe Temperatur erzeugen, so daß sich die Feststoff-Tabletten entzünden.

Damit der Anzündvorgang der Feststoff-Tabletten des bekannten Gasgenerators stets in reproduzierbarer Weise gewährleistet ist, sind innerhalb der Brennkammer mehrere Laser in einer Matrixanordnung vorgesehen, deren Strahlen durch eine geeignete Optik auf einzelne Feststoff-Tabletten gerichtet sind. Bei der Funktionsweise des bekannten Gasgenerators ist es zwingend notwendig, daß eine hohe punktuelle Strahlungsdichte auf der Oberfläche mindestens einer Feststoff-Tablette gegeben ist, da der Anzündvorgang ansonsten nicht ausgelöst wird. Diese punktuelle Anzündung des Treibmittels hat den Nachteil, daß das Überzündverhalten gegenüber einem gleichzeitigen Anzünden an mehreren Stellen des Treibmittels oder des gesamten Treibmittels wesentlich schlechter ist.

Weiterhin ist es von Nachteil, daß durch die Matrixanordnung mehrerer Laser und die notwendigen Fokusiereinrichtungen einer Strahlenoptik zum Teil große geometrische Dimensionen des bekannten Gasgenerators auftreten.

Zur Erhöhung der Funktionsweise des bekannten Gasgenerators kann es weiterhin notwendig werden, die Feststoff-Tabletten mit einer den Strahl des Laser zumindest teilweise absorbierenden Substanz zu beschichten. Aus diesem Grund erhöhen sich die Kosten, die bereits durch die aufwendige Montage des kompliziert aufgebauten Gasgenerators entstehen, noch weiter.

Aus der US 5,010,822 ist es zur Strahlenführung eines Lasers in einem Gasgenerator bekannt, transmittierende, reflektierende und fokusierende Bauteile zu verwenden. Durch die Verwendung dieser Bauteile muß der Strahl des außerhalb der Brennkammer des Gasgenerators angeordneten Lasers keinen geradlinigen Weg zur Brennkammer aufweisen. Nachteiligerweise wird dadurch aber der Montageaufwand erhöht, so daß die Herstellung des bekannten Gasgenerators äußerst kostenintensiv ist. Da der Laserstrahl wiederum zielgerichtet auf die Oberfläche eines in Tablettenform vorliegenden Feststoff-Treibmittels gelenkt werden muß, besitzt der aus der US 5,010,822 bekannte Gasgenerator zusätzlich die Nachteile des oben genannten Gasgenerators.

Auch bei dem aus der DE 42 11 672 A1 bekannten Gasgenerator muß ein optischer Zündimpuls aufgeteilt und an mehreren Stellen gleichzeitig in das in fester Form vorliegende Treibmittel eingekoppelt werden, damit das Treibmittel gleichzeitig abbrennt. Wenn dies nicht der Fall ist, kann kein Gasvolumen erzeugt werden, das einen Luftsack gleichmäßig aufbläst.

Die Verwendung eines flüssigen Treibmittels, das durch eine auf pyrotechnische Art funktionierende Anzündeeinheit entzündbar ist, ist aus der US 5,060,973 bekannt. Daher weist dieser Gasgenerator mehrere Teile auf, die befüllt und einzeln montiert werden müssen. Folglich erhöhen sich der Montageaufwand und die Herstellungskosten des Gasgenerators. Aufgrund der verwendeten Pyrotechnik müssen nach dem Abbrand des Treibmittels innerhalb der Brennkammer verbleibende Partikel und ggfs. die die Partikel zurückhaltenden Filtersysteme entsorgt werden. Außerdem können durch die Pyrotechnik schädliche Gase entstehen. Es ist auch zu beachten, daß die Ausfallwahrscheinlichkeit und die Störanfälligkeit eines auf pyrotechnischer Basis funktionierenden Gasgenerators erhöht ist. Beispielsweise kann das Zündmaterial Feuchtigkeit aufnehmen und zumindest teilweise unbrauchbar werden.

Aus der DE 24 31 686 ist es bekannt, innerhalb eines Gasgenerators ein gasförmiges Treibmittel zu verwenden. Der Gasgenerator ist aus mehreren Kammern aufgebaut, in denen das gasförmige Treibmittel und ein Anzündmaterial untergebracht sind. Wenn der Gasgenerator aktiviert wird, mischt sich das Anzündmaterial mit dem gasförmigen Treibmittel, indem eine Trennung zwischen den beiden Materialien durch die Zerstörung einer Trennwand aufgehoben wird. Der bekannte Gasgenerator ist kompliziert aufgebaut, benötigt mehrere einzelne Kammern und weist einen großen Gehäusekörper auf. Die einzelnen Kammern müssen getrennt befüllt werden und zu dem Gasgenerator zusammengebaut werden. Folglich entsteht auch bei diesem Gasgenerator ein großer Montageaufwand mit hohen Fertigungskosten.

Der DE 42 41 221 A1 kann entnommen werden, innerhalb eines Gasgenerators ein flüssiges Treibmittel auf eine pyrotechnische Art und Weise zu entzünden. Zunächst entzündet sich eine Anzündeeinheit. Anschließend kann auch das flüssige Treibmittel entzündet werden. Damit in der Anzündeeinheit erzeugte heiße Partikel zum Entzünden des Treibmittels in die Brennkammer gelangen können, sind die verschiedenen Kammern des Gasgenerators mit Hilfe von Durchführungen verbunden, die im nicht-aktivierten Zustand des Gasgenerators durch Berstmembranen verschlossen sind. Die Berstmembranen brechen erst bei Erreichen eines Mindestdrucks der Verbrennungsgase auf. Daher kann die Entzündung des flüssigen Treibmittel unter Umständen verzögert und nicht gleichmäßig erfolgen, so daß die Gefahr einer Detonation innerhalb der Brennkammer besteht.

Der vorliegenden Erfindung liegt die Aufgabe zugrunde, einen Gasgenerator der eingangs genannten Art derart weiterzuentwickeln, daß der Montageaufwand beim Zusammenbau des Gasgenerators verringert ist, daß innerhalb des Gasgenerators möglichst wenige einzelne, miteinander über Durchführungen verbundene Kammern vorgesehen sind, und daß der Anzündvorgang innerhalb der Brennkammer möglichst gleichzeitig gestartet werden bzw. ablaufen kann, ohne zusätzliche optische Fokusiereinrichtungen zu benötigen.

Diese Aufgabe wird dadurch gelöst, daß ein fluides Treibmittel in der Brennkammer vorgesehen ist, das durch einen oder mehrere großflächig unplaziert und ziellos in die Brennkammern gelenkte Strahlen entzündbar ist.

Unter einem fluiden Treibmittel wird ein flüssiges oder gasförmiges brennbares Treibmittel verstanden. Erfindungsgemäß kann in der Brennkammer eines Gasgenerators auch eine Mischung von flüssigen und gasförmigen, brennbaren Treibmitteln vorgesehen sein.

Bei der Aktivierung des erfindungsgemäßen Gasgenerators wird ein Licht- oder ein Laserstrahl, der eine ausreichende Intensität zum Entzünden des Treibmittels besitzt, in die Brennkammer gelenkt, ohne daß eine bestimmte Stelle innerhalb der Brennkammer zielgerichtet getroffen werden muß. Durch die Entzündung eines fluiden Treibmittels findet keine punktuelle Entzündung wie bei einem Feststoff-Treibmittel statt, da das fluide Treibmittel gleichmäßig und großflächig entzündet bzw. entflammt wird. Aus diesem Grund läuft der Anzündvorgang des gesamten Treibmittels des erfindungsgemäßen Gasgenerators gegenüber dem Stand der Technik gleichmäßiger und nahezu gleichzeitig ab. Durch das gleichzeitige und schnelle Anzünden des gesamten Treibmittels kommt es zu einem schnellen Druckaufbau und einem definierten Aufbau einer Druckwelle, so daß sich geringere Reaktionszeiten bis zur Entfaltung des Luftsackes und damit zur Entstehung der Schutzwirkung des Airbagsystems erreichen lassen.

Folglich ist durch den Gasgenerator nach der Lehre der vorliegenden Erfindung eine zuverlässige und reproduzierbare Zündung des Treibmittels gegeben.

Der erfindungsgemäße Gasgenerator besteht im wesentlichen aus einer großen Brennkammer, in der sich das Treibmittel befindet. An einer Außenseite eines Brennkammergehäuses ist die Einrichtung zur Erzeugung des optischen Zündimpulses angeordnet. Daher benötigt der Gasgenerator nur eine einzige Kammer mit einer geringen Anzahl von Durchführungen, die besonders einfach abgedichtet werden können. Durch die Reduzierung der Anzahl der Durchführungen weist die Brennkammer eine verringerte Leckrate auf. Außerdem lassen sich der Material- und Montageaufwand und somit auch die dabei entstehenden Kosten deutlich reduzieren.

Wenn einzelne oder mehrere Strahlen durch eine Strahlteilungsoptik aufgefächert in die Brennkammer gelenkt werden, wird eine weiträumige Anzündung des Treibmittels erreicht. Über die Anzahl der Teilstrahlen kann die Anzündung (Geschwindigkeit und Ausbreitung einer Flammfront) an verschiedene Leistungsformen des Gasgenerators angepaßt werden.

Bevorzugt ist es, daß die Intensität des optischen Zündimpulses einstellbar ist. Dies hat den Vorteil, daß der erfindungsgemäße Gasgenerator nicht auf ein einziges fluides Treibmittel beschränkt ist, sondern daß je nach Einsatzzweck des Gasgenerators, beispielsweise als Fahrerairbag oder als Seitenairbag, ein anderes Treibmittel ausgewählt werden kann, das sich bei einer anderen Temperatur entzündet und eine andere Verbrennungscharakteristik aufweist. Durch die Regelung des optischen Zündimpulses ist eine Leistungsanpassung des Gasgenerators durch eine Variierung der Zündenergie möglich.

Vorteilhafterweise ist die Einrichtung zur Erzeugung des optischen Zündimpulses ein Halbleiterlaser. Die Betriebsspannung des Halbleiterlasers kann ohne größeren Aufwand von der Bordelektronik des Fahrzeug zur Verfügung gestellt werden. Moderne Halbleiterlaser weisen kurze Ansprechzeiten auf und können mit einer hohen Leistung betrieben werden.

Bei einer bevorzugten Ausführungsform ist die Einrichtung zur Erzeugung des optischen Zündimpulses innerhalb der Brennkammer angeordnet. Aus diesem Grund kann das Gehäuse der Brennkammer aus einem lichtundurchlässigen und kostengünstigen Material gefertigt werden.

Bei einer anderen Variante des erfindungsgemäßen Gasgenerators ist die Einrichtung zur Erzeugung des optischen Zündimpulses an einer Außenseite der Brennkammer befestigt, die einen lichtdurchlässigen Brennkammerbereich aufweist. Dies erleichtert den Zusammenbau des Gasgenerators, indem zuerst die Brennkammer mit dem brennbaren Fluid gefüllt und anschließend verschlossen werden kann, so daß in den nachfolgenden Schritten des Zusammenbaus weitere Komponenten des Gasgenerators mit der Brennkammer verbunden werden können.

Der Montageaufwand des Gasgenerators läßt sich noch weiter dadurch reduzieren, daß die Einrichtung zur Erzeugung des optischen Zündimpulses auf die Außenseite der Brennkammer, vorzugsweise auf den lichtdurchlässigen Bereich, aufklebbar ist.

Bei einer anderen Ausführungsform ist die Einrichtung zur Erzeugung des Laserstrahl mit Hilfe eines Halteringes an der Brennkammer befestigbar. Eine auf diese Art und Weise an der Brennkammer befestigte Einrichtung zur Erzeugung des Laserstrahls ist vorteilhafterweise lösbar mit der Brennkammer verbunden und kann leicht ausgetauscht werden.

Damit die Einrichtung zur Erzeugung des optischen Zündimpulses austauschbar ist und dennoch mit der erforderlicher Stabilität an der Brennkammer befestigt werden kann, ist der Haltering an der Brennkammer angeschweißt. Es wäre ebenso denkbar, den Haltering auch anzuschrauben oder auf eine andere Art und Weise dauerhaft zu befestigen.

Bei einer weiteren bevorzugten Ausführungsform ist der lichtdurchlässige Brennkammerbereich durch eine Glasdurchführung, vorzugsweise durch ein Glasfaserkabel, gebildet. Dies hat den Vorteil, daß nur ein möglichst kleiner Bereich der Brennkammer lichtdurchlässig ausgebildet werden muß und der optische Zündimpuls auf eine einfache Art und Weise in das Innere der Brennkammer geleitet werden kann.

Die Wirkungsweise des erfindungsgemäßen Gasgenerators kann noch weiter dadurch erhöht und verbessert werden, daß die Glasdurchführung auf die Durchlässigkeit einer bestimmten Wellenlänge des Laserstrahls abgestimmt ist. Dies ermöglicht es, einen Laserstrahl mit einer bestimmten Energie bzw. Strahlungsdichte ohne Energieverlust in das Innere der Brennkammer zu leiten.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand zweier Ausführungsbeispiels näher erläutert. Es zeigen:
- Fig. 1: eine schematische Darstellung einer Brennkammer eines erfindungsgemäßen Gasgenerators, an deren Außenseite eine Einrichtung zur Erzeugung eines optischen Zündimpulses vorgesehen ist; und
- Fig. 2: eine schematische Darstellung einer Brennkammer eines erfindungsgemäßen Gasgenerators, innerhalb der eine Einrichtung zur Erzeugung eines optisches Zündimpulses Vorgesehen ist.

Die Figuren der Zeichnung sind nicht notwendigerweise maßstäblich zu verstehen.

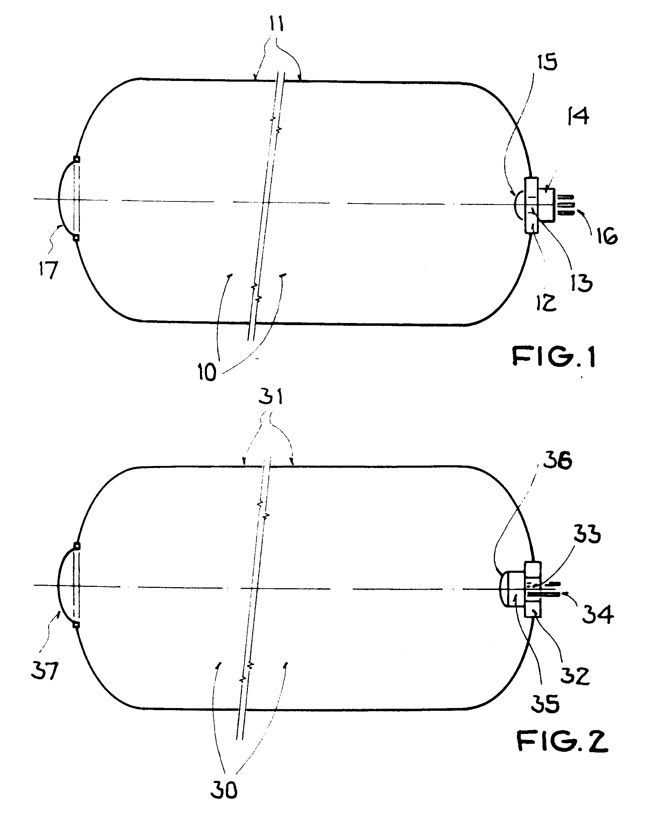

In der Fig. 1 ist eine Brennkammer 10 eines erfindungsgemäßen Gasgenerators schematisch dargestellt, bei dem ein Haltering 12 in einem Brennkammergehäuse 11 eingeschweißt ist. Mit Hilfe des Halterings 12 ist eine Glasdurchführung 13 an dem Brennkammergehäuse 11 befestigt. Die Glasdurchführung 13 ist durch ein Glasfaserkabel gebildet und aus Festigkeits- und Dichtigkeitsgründen unlösbar in den Haltering 12 integriert. Daneben ist es auch möglich, den Haltering 12 lösbar zu gestalten, wobei zur Sicherstellung der Dichtigkeit aus der Hochvakuumtechnik bekannte Dichtungen (beispielsweise mittels Gewinde) einsetzbar sind. Das Brennkammergehäuse 11 ist als Druckgasflasche ausgebildet. An einer Außenseite des Brennkammergehäuses 11 ist ein Halbleiterlaser 14 auf der Glasdurchführung 13 derart angebracht, daß ein Laserstrahl durch die Glasdurchführung 13 in die Brennkammer 10 eintreten kann. Auf diese Weise kann ein innerhalb der Brennkammer 10 befindliches fluides Treibmittel, beispielsweise ein Flüssigtreibmittel oder ein brennbares Gas, entzündet werden. An die Glasdurchführung 13 schließt sich innerhalb der Brennkammer 10 ein Strahlenteiler 15 an, so daß der eintretende Laserstrahl in mehrere Strahlen aufgeteilt wird und vielfach auf das im Inneren der Brennkammer 10 angeordnete brennbare Fluid trifft. Der Halbleiterlaser 14 ist über elektrische Zuleitungen 16 mit der Bordelektronik des Fahrzeugs verbunden, die die zum Betreiben des Halbleiterlasers 14 notwendigen Betriebsspannungen bereitstellt.

Durch das Entzünden des brennbaren Fluids und den nachfolgenden Abbrand entsteht eine Druckwelle innerhalb der Brennkammer 10, die sich bevorzugt in Richtung einer Berstscheibe 17 fortpflanzen kann. Die Berstscheibe 17 ist auf der der Glasdurchführung 13 gegenüberliegenden Stirnseite des Brennkammergehäuses 11 angeordnet und kann mit einer Sollbruchstelle in der Mitte der Berstscheibe 17 ausgebildet sein. Bei einem bestimmten Druck des durch den Abbrand des fluiden Treibmittels entstehenden Gases wird die Berstscheibe zerstört und das durch den Abbrand erzeugte Gas kann aus der Brennkammer 10 ausströmen und einen Luftsack des Airbagsystems aufblasen.

Figur 2 zeigt eine schematische Darstellung einer Brennkammer 30, in der sich ein fluides Treibmittel befindet. An einem Brennkammergehäuse 31 ist an einer Stirnseite ein Haltering 32 eingeschweißt. Eine an dem Haltering 32 befestigte Glasdurchführung 33 dient dazu, elektrische Zuleitungen 34, mit einem innerhalb der Brennkammer befestigten Halbleiterlaser 35 zu verbinden. Die elektrischen Zuleitungen 34 werden durch die Glasdurchführung 33 nach außen geführt. Vor dem Halbleiterlaser 35 ist ein Strahlenteiler 36 angeordnet, so daß ein innerhalb des Halbleiterlasers 35 erzeugter Laserstrahl aufgefächert werden kann. Dies führt zu einer Verteilung der Zündquellen, um eine weiträumige Anzündung des Treibmittels zu ermöglichen.

Wenn das innerhalb der Brennkammer 30 befindliche Fluid durch einen optischen Zündimpuls, d.h. durch einen Laserstrahl, entzündet wird, bildet sich innerhalb der Brennkammer 30 eine Druckwelle, die sich in Richtung einer Berstscheibe 37 fortpflanzt. Durch den Abbrand des fluiden Treibmittels entsteht ein Gas, das aus der Brennkammer 30 durch die von der Berstscheibe 37 freigegebene Öffnung des Brennkammergehäuses 31 ausströmen kann. Anschließend kann durch das ausströmende Gas ein Luftsack eines Airbagsystems aufgeblasen werden.

## Patentansprüche

1. Gasgenerator für ein Airbagsystem mit einer Brennkammer (10; 30), in der ein brennbares Treibmittel untergebracht ist, das durch eine im Bereich der Brennkammer (10; 30) angeordnete Einrichtung (14; 35) zur Erzeugung eines optischen Zündimpulses, vorzugsweise eines Laserstrahls, entzündbar ist, dadurch gekennzeichnet, daß ein fluides Treibmittel in der Brennkammer (10; 30) vorgesehen ist, das durch einen oder mehrere großflächig unplaziert und ziellos in die Brennkammer (10; 30) gelenkte Strahlen entzündbar ist.

2. Gasgenerator nach Anspruch 1, dadurch gekennzeichnet, daß die Intensität des optischen Zündimpulses einstellbar ist.

3. Gasgenerator nach Anspruch 1 oder 2, dadurch gekennzeichnet, daß die Einrichtung (14; 35) zur Erzeugung des optischen Zündimpulses ein Halbleiterlaser ist.

4. Gasgenerator nach einem der vorhergehenden Ansprüche, dadurch gekennzeichnet, die Einrichtung (35) zur Erzeugung des optischen Zündimpulses innerhalb der Brennkammer (30) angeordnet ist.

5. Gasgenerator nach einem Ansprüche 1 bis 4, dadurch gekennzeichnet, daß die Einrichtung (14) zur Erzeugung des optischen Zündimpulses an einer Außenseite der Brennkammer (10) befestigt ist, die einen lichtdurchlässigen Brennkammerbereich aufweist.

6. Gasgenerator nach Anspruch 5, dadurch gekennzeichnet, daß die Einrichtung (14) zur Erzeugung des optischen Zündimpulses auf die Außenseite der Brennkammer (10), vorzugsweise auf den lichtdurchlässigen Brennkammerbereich aufgeklebt ist.

7. Gasgenerator nach Anspruch 5, dadurch gekennzeichnet, daß die Einrichtung (14; 35) zur Erzeugung des optischen Zündimpulses mit Hilfe eines Halteringes (12; 32) an der Brennkammer (10; 30) befestigt ist.

8. Gasgenerator nach Anspruch 7, dadurch gekennzeichnet, daß der Haltering (12; 32) an der Brennkammer (10; 30) angeschweißt ist.

9. Gasgenerator nach einem der Ansprüche 5 bis 8, daß der lichtdurchlässige Brennkammerbereich durch eine Glasdurchführung (13; 33), vorzugsweise ein Glasfaserkabel, gebildet ist.

10. Gasgenerator nach Anspruch 9, dadurch gekennzeichnet, daß die Glasdurchführung (13; 33) auf die Durchlässigkeit einer bestimmten Wellenlänge des Laserstrahls abgestimmt ist.
